# EUROPEAN PATENT APPLICATION

(11) **EP 4 411 973 A1**
(43) Date of publication of application: **07.08.2024**
(21) Application number: 22875428.9
(22) Date of filing: 31.03.2022
(51) Int. Cl.: H01M 50/538, H01M 4/04, H01M 4/13, H01M 4/139, H01M 50/533

(54) **ELECTRODE CURRENT COLLECTING FOIL, ELECTRODE, BATTERY, METHOD FOR MANUFACTURING ELECTRODE CURRENT COLLECTING FOIL, AND METHOD FOR MANUFACTURING BATTERY**

(30) Priority: 28.09.2021 JP 2021158403
(71) Applicant: Vehicle Energy Japan Inc., Ibaraki 312-8505 (JP)
(72) Inventor: SUZUKI, Takayuki, Hitachinaka-shi, Ibaraki 312-8505 (JP)
(74) Representative: Strehl Schübel-Hopf & Partner
(86) International application number: PCT/JP2022/016970
(87) International publication number: WO 2023/053545

(57) **Abstract**

A current collection foil (for example, a positive electrode current collection layer 11S) of an electrode (a positive electrode 11 and a negative electrode 12) includes a current collection section 11a joined with an active material and wound and a plurality of (for example, fifteen) terminal sections (for example, positive electrode tabs 11b) provided at a side edge extending in a winding direction of the current collection section 11a. The terminal sections adjacent to one another in the winding direction include the terminal sections formed with relatively longer intervals on a side close to another end portion 11q at a winding end than a side close to one end portion 11p at a winding start of the current collection section 11a. The plurality of terminal sections overlap in a state in which the current collection section 11a is wound. At least one of the terminal sections and the current collection section 11a includes a mark for distinguishing any one (for example, a first) terminal sections of the current collection section 11a and the other (for example, second to fifteenth) terminal sections.

## Description

### Technical Field

The present invention relates to a current collection foil of an electrode, an electrode, a battery, a manufacturing method for a current collection foil of an electrode, and a manufacturing method for a battery.

### Background Art

There has been known a technique for forming a plurality of terminal sections (electrode tabs) for an electrode to be wound (see, for example, Patent Literature 1).

### Citation List

### Patent Literature

Patent Literature 1: Japanese Translation of International Patent Application No. 2021-500734

### Summary of Invention

### Technical Problem

It is demanded to properly superimpose a plurality of terminal sections of an electrode in a wound charge/discharge body of a battery.

### Solution to Problem

A current collection foil of an electrode of the present invention includes: a current collection section joined with an active material and wound; and a plurality of terminal sections provided at a side edge extending in a winding direction of the current collection section. The terminal sections adjacent to one another in the winding direction include the terminal sections formed with relatively longer intervals on a side close to another end portion at a winding end than a side close to one end portion at a winding start of the current collection section. The plurality of terminal sections overlap in a state in which the current collection section is wound. At least one of the terminal sections and the current collection section includes a mark for distinguishing any one of the terminal sections of the current collection section and the other terminal sections.

An electrode of the present invention includes: the current collection foil; and an active material. The active material is joined to the current collection foil.

A battery of the present invention includes: a positive electrode; a negative electrode; an insulator provided between the positive electrode and the negative electrode; and an electrolyte impregnated in the insulator. At least one of the positive electrode and the negative electrode is the electrode.

A manufacturing method for a current collection foil of an electrode of the present invention is a method of cutting an electrode base material in which a plurality of current collection foils of an electrode linearly stretch, each of the plurality of current collection foils including a current collection section joined with an active material and wound and a plurality of terminal sections provided at a side edge extending in a winding direction of the current collection section, and manufacturing the current collection foil of the electrode. As the electrode base material, an electrode base material having the following configuration is used. The terminal sections adjacent to one another in the winding direction include the terminal sections formed with relatively longer intervals on a side close to another end portion at a winding end than a side close to one end portion at a winding start of the current collection section. The plurality of terminal sections overlap in a state in which the current collection section is wound. At least one of the terminal sections and the current collection section includes a mark for distinguishing any one of the terminal sections of the current collection section and the other terminal sections. The manufacturing method for the current collection foil of the electrode of the present invention includes: a first step of conveying the electrode base material; a second step of forming the mark; and a third step of cutting, based on the mark, the electrode base material in a direction crossing a conveying direction of the electrode base material and forming the one end portion and the other end portions.

A manufacturing method for a battery of the present invention includes a step of winding and cutting a positive electrode, a negative electrode, and an insulator provided between the positive electrode and the negative electrode while recognizing at least one mark of a mark of the positive electrode and a mark of the negative electrode. As a current collection foil included in at least one of the positive electrode and the negative electrode, the current collection foil manufactured by the manufacturing method for the current collection foil of the electrode is used.

### Advantageous Effect of Invention

In a wound charge/discharge body of a battery, it is possible to properly superimpose a plurality of terminal sections of an electrode.

### Brief Description of Drawings

[Figure 1] Figure 1 is a perspective view showing a battery 1 in a first embodiment.
[Figure 2] Figure 2 is a sectional perspective view showing a periphery of a negative electrode terminal 42 of the battery 1 in the first embodiment.
[Figure 3] Figure 3 is a sectional view showing the periphery of the negative electrode terminal 42 of the battery 1 in the first embodiment.
[Figure 4] Figure 4 is a sectional perspective view showing a periphery of a positive electrode terminal 41 of the battery 1 in the first embodiment.
[Figure 5] Figure 5 is a sectional view showing the periphery of the positive electrode terminal 41 of the battery 1 in the first embodiment.
[Figure 6] Figure 6 is an exploded perspective view showing the battery 1 in the first embodiment.
[Figure 7] Figure 7 is a perspective view showing a charge/discharge body 10 of the battery 1 in the first embodiment.
[Figure 8] Figure 8 is a sectional view showing a part of the charge/discharge body 10 of the battery 1 in the first embodiment.
[Figure 9] Figure 9 is a sectional view showing a part of a charge/discharge body 110 of a modification of the battery 1 in the first embodiment.
[Figure 10] Figure 10 is a perspective view showing electrodes (a positive electrode 11 and a negative electrode 12) and separators 13 of the battery 1 in the first embodiment.
[Figurer 11] Figure 11 is an exploded perspective view showing a periphery of a negative electrode terminal 42 of the battery 1 in the first embodiment.
[Figure 12] Figure 12 is an exploded perspective view showing a lid 52 and a sealing plug 53 of the battery 1 in the first embodiment.
[Figure 13] Figure 13 is an exploded perspective view showing a periphery of a positive electrode terminal 41 of the battery 1 in the first embodiment.
[Figure 14] Figure 14 is a perspective view showing a manufacturing method for current collection foils (a positive electrode current collection layer 11S and a negative electrode current collection layer 12S) of the electrodes (the positive electrode 11 and the negative electrode 12) of the battery 1 in the first embodiment.
[Figure 15] Figure 15 is a perspective view showing a manufacturing method for the charge/discharge body 10 of the battery 1 in the first embodiment.
[Figure 16] Figure 16 is a perspective view showing electrodes (a positive electrode 211 and a negative electrode 212) and the separators 13 of a battery in a second embodiment.
[Figure 17] Figure 17 is a perspective view showing electrodes (a positive electrode 311 and a negative electrode 312) and the separators 13 of a battery in a third embodiment.

### Description of Embodiments

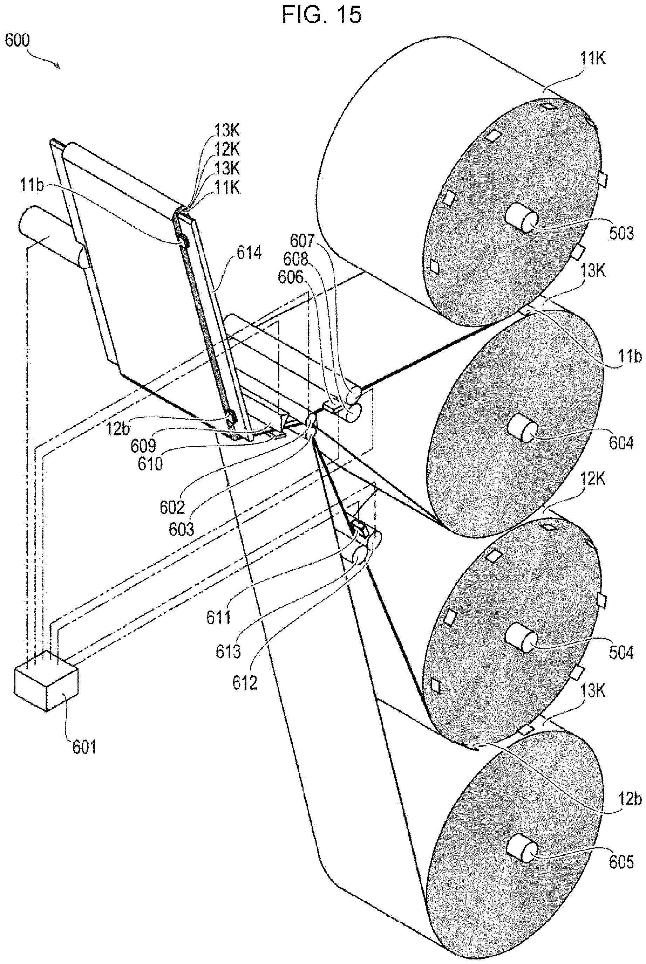

Each of embodiments of the present invention is explained with reference to the drawings. To facilitate understanding of each of the embodiments, sizes and ratios of constituent members are sometimes exaggerated in the drawings. In Figure 15, illustration of most of positive electrode tabs 11b and negative electrode tabs 12b is omitted. In each of the embodiments, the same reference numerals and signs are given to the same components and redundant explanation of the components is omitted. In each of the embodiments, a left-handed XYZ orthogonal coordinate system in which an X axis, a Y axis, and a Z axis are set as coordinate axes is used. Arrows of the axes of the X axis, the Y axis, and the Z axis indicate positive directions of the coordinate axes. The X axis is a coordinate axis in a longitudinal direction of a rectangular parallelepiped battery. The Y axis is a coordinate axis in a latitudinal direction of the battery. The Z axis is a coordinate axis in a height direction of the battery. A plane formed by the X axis and the Y axis is referred to as an XY plane, a plane formed by the Y axis and the Z axis is referred to as a YZ plane, and a plane formed by the X axis and the Z axis is referred to as an XZ plane. However, a positional relation represented by the XYZ orthogonal coordinate system is only a relative positional relation.

### [First Embodiment]

### (Configurations of current collection foil of electrode, electrode, and battery 1 in first embodiment)

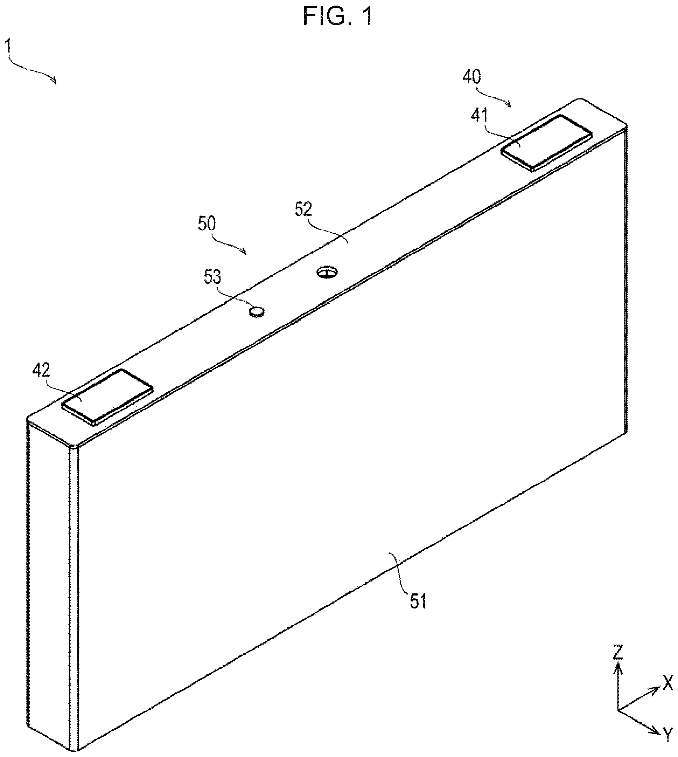

Configurations of a current collection foil of an electrode, an electrode, and a battery 1 in a first embodiment are explained with reference to Figure 1 to Figure 13.

The battery 1 includes, for example, as shown in Figure 1 to Figure 5, a charge/discharge body 10 that charges and discharges electricity, a current collector 20 coupled to the charge/discharge body 10, a current blocker 30 coupled to the current collector 20, an external terminal 40 coupled to the current collector 20 or the current blocker 30, and an exterior body 50 in or to which the constituent members of the battery 1 are housed or attached. The battery 1 includes an insulator 60 that insulates the constituent members of the battery 1 and the exterior body 50 and a sealing body 70 that seals the constituent members of the battery 1 and the exterior body 50.

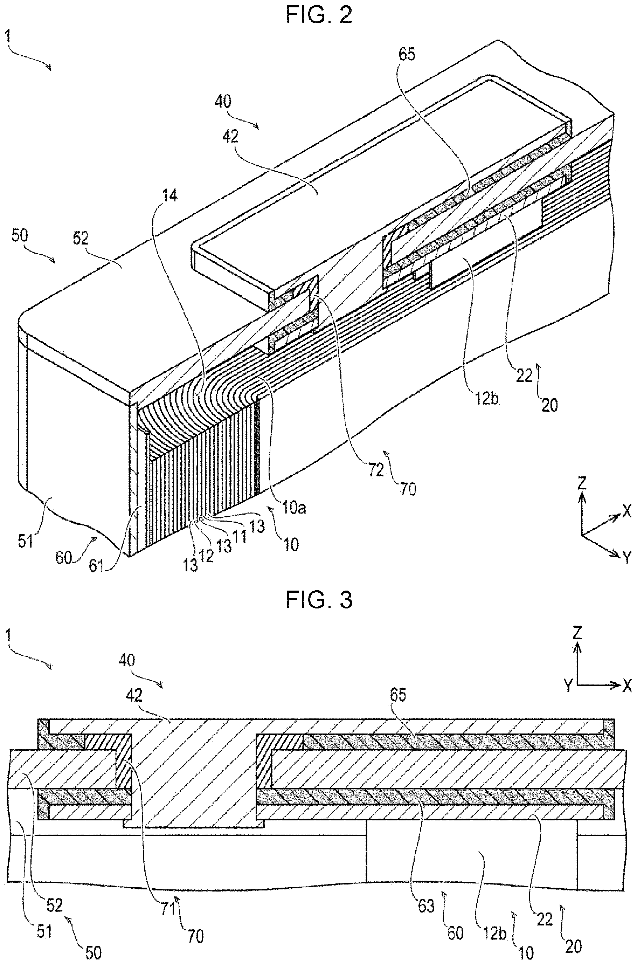

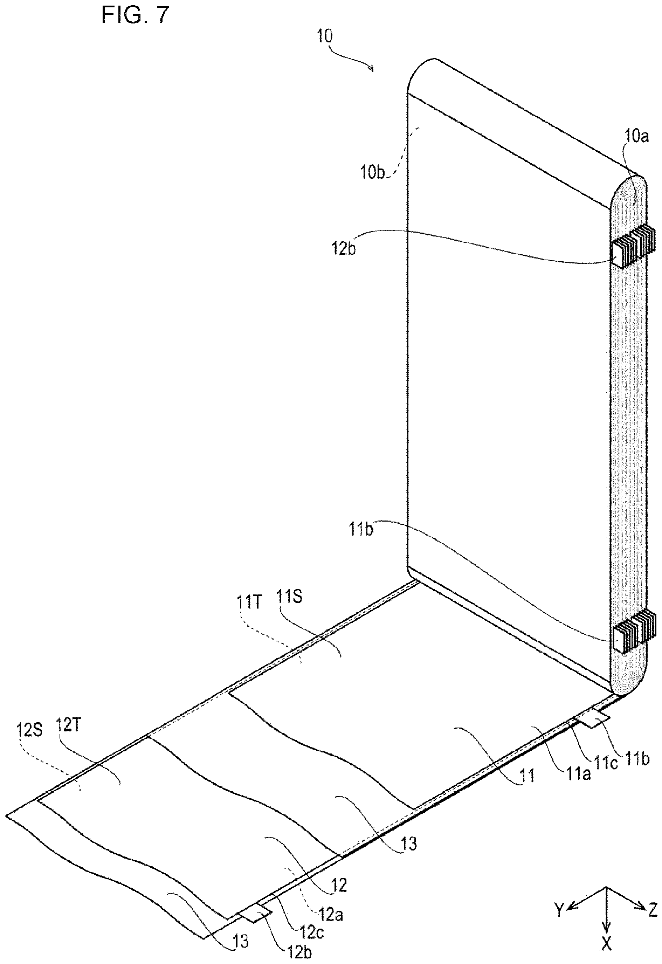

The charge/discharge body 10 charges and discharges electricity. The charge/discharge body 10 shown in Figure 2 to Figure 8 includes a positive electrode 11, a negative electrode 12, separators 13 (insulating members), and an electrolyte 14. As shown in Figure 7, the charge/discharge body 10 is configured by winding, in a rectangular parallelepiped shape, the constituent members stacked in the order of the positive electrode 11, the separator 13, the negative electrode 12, and the separator 13.

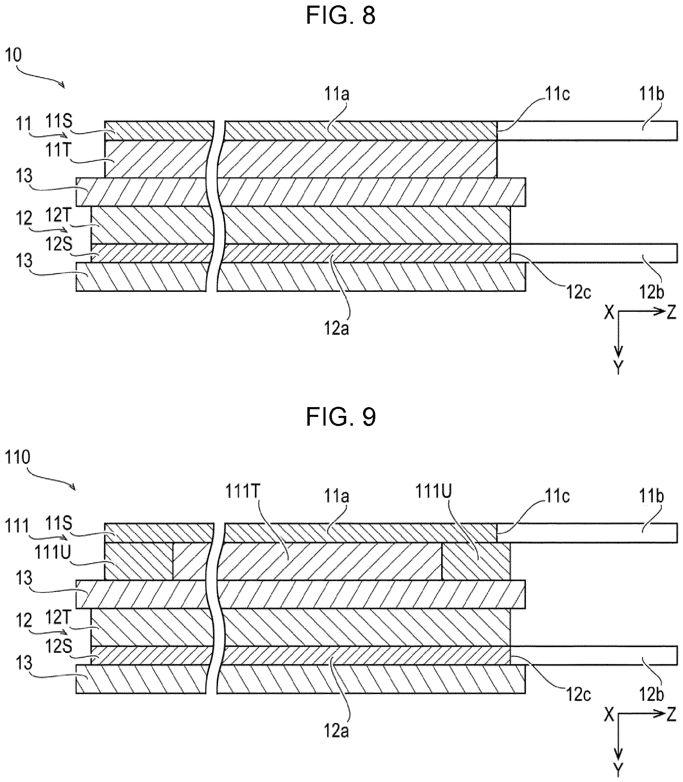

The positive electrode 11 includes, for example, as shown in Figure 7 and Figure 8, a long positive electrode current collection layer 11S (current collection foil) and a positive electrode active material layer 11T joined to the positive electrode current collection layer 11S. The positive electrode current collection layer 11S includes a current collection section 11a and the positive electrode tab 11b. The current collection section 11a is wound. The positive electrode active material layer 11T is joined to the current collection section 11a. The positive electrode active material layer 11T faces, as shown in Figure 8, for example, the entire area extending in the latitudinal direction of the current collection section 11a (the Z-axis direction).

For example, as shown in Figure 7 and Figure 8, the positive electrode tab 11b (terminal section) projects in the latitudinal direction of the current collection section 11a from a side edge 11c extending in the longitudinal direction (winding direction) of the current collection section 11a. The positive electrode tab 11b is formed integrally with the current collection section 11a. A plurality of positive electrode tabs 11b are formed in one current collection section 11a.

The positive electrode tabs 11b are configured by so-called irregular pitches. That is, intervals among the positive electrode tabs 11b adjacent to one another in a winding direction (terminal sections of the same electrode adjacent to one another in the winding direction) are set relatively longer in the positive electrode tabs 11b adjacent to one another on a side close to another end portion 11q at a winding end of the current collection section 11a than the positive electrode tabs 11b adjacent to one another on a side close to one end portion 11p at a winding start of the current collection section 11a. Distances among all of the positive electrode tabs 11b are set relatively longer from the one end portion 11p toward the other end portion 11q of the current collection section 11a. Therefore, even if the total length for one round of the positive electrode 11 increases every time constituent members of the charge/discharge body 10 are wound, all of the positive electrode tabs 11b properly overlap in a state in which the current collection section 11a is wound.

Here, concerning the intervals among the positive electrode tabs 11b adjacent to one another in the winding direction, the positive electrode 11 only has a configuration including the positive electrode tabs 11b configured to have, from the one end portion 11p toward the other end portion 11q of the current collection section 11a, relatively longer intervals among the positive electrode tabs 11b adjacent to one another. That is, all of the positive electrode tabs 11b are not limited to a configuration in which the intervals among the positive electrode tabs 11b adjacent to one another in the winding direction are relatively longer from the one end portion 11p toward the other end portion 11q of the current collection section 11a. For example, the positive electrode tabs 11b adjacent to one another in the winding direction may be configured such that regular pitches and irregular pitches are alternately repeated from the one end portion 11p toward the other end portion 11q of the current collection section 11a.

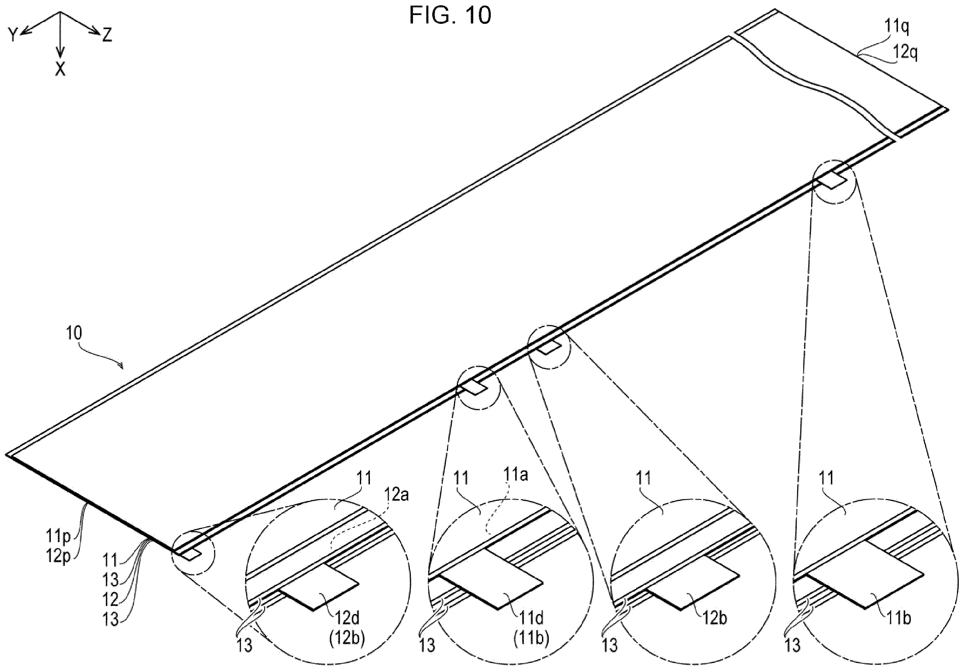

As shown in Figure 10, a mark is included in a positive electrode tab 11d (which is a mark and is one of the plurality of positive electrode tabs 11b). In the first embodiment, the mark is configured by differentiating a shape of the positive electrode tab 11d from a shape of the other positive electrode tabs 11b. That is, the mark means, in the positive electrode tab 11d, an external shape different from the external shape of the other positive electrode tabs 11b. Specifically, as shown in Figure 10, the mark is configured by the positive electrode tab 11d located closest to the one end portion 11p of the current collection section 11a being formed smaller than the other positive electrode tabs 11b of the current collection section 11a.

The mark may be configured by forming the positive electrode tabs 11b and the positive electrode tab 11d respectively in trapezoidal shapes and differentiating ratios of lengths of pairs of opposite sides (lower sides and upper sides). That is, the mark may be configured by differentiating a ratio of the lengths of the lower side and the upper side of the positive electrode tab 11d (the mark) and a ratio of the lengths of the lower sides and the upper sides of the positive electrode tabs 11b.

The mark may be configured by differentiating the sizes of corner portions of the positive electrode tabs 11b and the positive electrode tab 11d. That is, the mark may be configured by curving the corner portions of the positive electrode tab 11d (the mark) and the positive electrode tabs 11b and differentiating a curvature radius of the corner portion of the positive electrode tab 11d and a curvature radius of the corner portions of the positive electrode tabs 11b.

Here, the mark included in the positive electrode tab 11b only has to be configured to be able to distinguish any one positive electrode tab 11b and the other positive electrode tabs 11b among the plurality of positive electrode tabs 11b formed in the current collection section 11a. That is, the positive electrode tab 11b including the mark is not limited to a first positive electrode tab 11b located at a winding start of the current collection section 11a. For example, the positive electrode tab 11b including the mark may be the positive electrode tab 11b located at a winding end of the current collection section 11a or the positive electrode tab 11b located in the center among the plurality of positive electrode tabs 11b formed in the current collection section 11a. The other positive electrode tabs 11b are at least one or more (for example, all) positive electrode tabs 11b other than the one positive electrode tab 11b among the plurality of positive electrode tabs 11b included in the positive electrode current collection layer 11S.

The positive electrode tabs 11b and the positive electrode tab 11d are examples of terminal sections. The terminal sections may be integral with the current collection section 11a or may be separate from the current collection section 11a. A plurality of terminal sections are provided at a side edge (at least one side edge) extending in the winding direction (the longitudinal direction) of the current collection section 11a.

The current collection section 11a of the positive electrode 11 is formed by, for example, aluminum or an aluminum alloy. The positive electrode active material layer 11T includes a positive electrode active material, a binder, a conductive auxiliary agent, and the like formed by a lithium-containing complex oxide. As the lithium-containing complex oxide, for example, a metal element such as nickel (Ni), cobalt (Co), or manganese (Mn) and lithium (Li) are used.

The negative electrode 12 includes, for example, as shown in Figure 7 and Figure 8, a long negative electrode current collection layer 12S (current collection foil) and a negative electrode active material layer 12T joined to the negative electrode current collection layer 12S. The negative electrode current collection layer 12S includes a current collection section 12a and the negative electrode tab 12b. The current collection section 12a of the negative electrode 12 is, as shown in Figure 8, longer in width in the latitudinal direction (the Z-axis direction) compared with the current collection section 11a of the positive electrode 11. Both the ends in the latitudinal direction of the current collection section 11a of the positive electrode 11 are located via the separator 13 within a range extending in the latitudinal direction of the current collection section 12a of the negative electrode 12. The negative electrode active material layer 12T is joined to the current collection section 12a. The negative electrode active material layer 12T faces, for example, the entire area extending in the latitudinal direction (the Z-axis direction) of the current collection section 12a.

For example, as shown in Figure 7 and Figure 8, the negative electrode tab 12b (terminal section) projects in the latitudinal direction of the current collection section 12a from a side edge 12c extending in the longitudinal direction (winding direction) of the current collection section 12a. The negative electrode tab 12b projects in the same direction as the direction of the positive electrode tab 11b of the positive electrode 11 in a state in which the negative electrode tab 12b is stacked with the positive electrode 11 via the separator 13. The negative electrode tab 12b is separated from the positive electrode tab 11b of the positive electrode 11 in the state in which the negative electrode tab 12b is stacked with the positive electrode 11 via the separator 13. The negative electrode tab 12b is formed integrally with the current collection section 12a. A plurality of negative electrode tabs 12b are formed in one current collection section 12a.

Like the positive electrode tabs 11b, the negative electrode tabs 12b are configured by so-called irregular pitches. That is, intervals among the negative electrode tabs 12b adjacent to one another in a winding direction is set relatively longer in the negative electrode tabs 12b adjacent to one another on a side close to the other end portion 12q at a winding end of the current collection section 12a than the negative electrode tabs 12b adjacent to one another on a side close to one end portion 12p of a winding start of the current collection section 12a. All of the negative electrode tabs 12b overlap in a state in which the current collection section 12a is wound. Here, like the intervals among the positive electrode tabs 11b, concerning the intervals among the negative electrode tabs 12b, the negative electrode 12 only has a configuration including the negative electrode tabs 12b configured to have, from the one end portion 12p toward the other end portion 12q of the current collection section 12a, relatively longer intervals among the negative electrode tabs 12b adjacent to one another.

As shown in Figure 10, as in the positive electrode tab 11d, a mark is included in a negative electrode tab 12d (one of the plurality of negative electrode tabs 12b). In the first embodiment, the mark is configured by differentiating a shape of the negative electrode tab 12d from a shape of the other negative electrode tabs 12d. That is, the mark means, in the negative electrode tab 12d, an external shape different from the external shape of the other negative electrode tabs 12b. Specifically, as shown in Figure 10, the mark is configured by the negative electrode tab 12d located closest to the one end portion 12p of the current collection section 12a being formed smaller than the other negative electrode tabs 12b of the current collection section 12a.

The mark may be configured by forming the negative electrode tabs 12b and the negative electrode tab 12d respectively in trapezoidal shapes and differentiating ratios of lengths of pairs of opposite sides (lower sides and upper sides). That is, the mark may be configured by differentiating a ratio of the lengths of the lower side and the upper side of the negative electrode tab 12d (the mark) and a ratio of the lengths of the lower sides and the upper sides of the negative electrode tabs 12b.

The mark may be configured by differentiating the sizes of corner portions of the negative electrode tabs 12b and the negative electrode tab 12d. That is, the mark may be configured by curving the corner portions of the negative electrode tab 12d (the mark) and the negative electrode tabs 12b and differentiating a curvature radius of the corner portion of the negative electrode tab 12d and a curvature radius of the corner portions of the negative electrode tabs 12b.

Here, like the positive electrode tab 11b, the mark included in the negative electrode tab 12b only has to be configured to be able to distinguish any one negative electrode tab 12b and the other negative electrode tabs 12b among the plurality of negative electrode tabs 12b formed in the current collection section 12a. The other negative electrode tabs 12b are at least one or more (for example, all) negative electrode tabs 12b other than the one negative electrode tab 12b among the plurality of negative electrode tabs 12b included in the negative electrode current collection layer 12S.

The negative electrode tabs 12b and the negative electrode tab 12d are examples of terminal sections. The terminal sections may be integral with the current collection section 12a or may be separate from the current collection section 12a. A plurality of terminal sections are provided at a side edge (at least one side edge) extending in the winding direction (the longitudinal direction) of the current collection section 12a.

The current collection section 12a of the negative electrode 12 is formed by, for example, copper or a copper alloy. The negative electrode active material layer 12T includes a negative electrode active material, a binder, a conductive auxiliary agent, and the like formed by a carbon-based material. As the carbon-based material, for example, graphite is used.

For example, as shown in Figure 7 and Figure 8, the separator 13 (an insulator) allows lithium ions to pass while insulating the positive electrode 11 and the negative electrode 12. The separator 13 is formed long. The separator 13 is long in the width in the latitudinal direction (the Z-axis direction) compared with the current collection section 11a of the positive electrode 11 and the current collection section 12a of the negative electrode 12. Both the ends in the latitudinal direction of the current collection section 11a of the positive electrode 11 are located and both ends in the latitudinal direction of the current collection section 12a of the negative electrode 12 are located within a range extending in the latitudinal direction of the separator 13. The separator 13 is made of a porous material. As the separator 13, polyethylene (PE) or polypropylene (PP) is used. A heat resistant insulating member may be used instead of the separator 13. As the heat resistant insulating member, for example, ceramics is used. The configuration explained above is a so-called separatorless configuration.

The electrolyte 14 is equivalent to a so-called electrolytic solution. The electrolyte 14 is impregnated in the separators 13. The electrolyte 14 includes an organic solvent, a supporting electrolyte, and an additive. As the organic solvent, for example, carbonic ester is used. As the supporting electrolyte, for example, lithium salt is used.

A charge/discharge body 110 that is a modification of the charge/discharge body 10 is explained with reference to Figure 9. In the charge/discharge body 110, a configuration of a positive electrode 111 is different from the configuration of the positive electrode 11 in the first embodiment. In a configuration of the charge/discharge body 110, the same reference numerals and signs are added to the same components as the components of the charge/discharge body 10 and explanation of the components is omitted. A positive electrode active material layer 111T of the charge/discharge body 110 faces a portion excluding both the ends extending in the latitudinal direction of the current collection section 11a (the Z-axis direction). A heat resistant insulating layer 111U of the charge/discharge body 110 is joined to both the ends extending in the latitudinal direction of the current collection section 11a and a proximal end portion of the positive electrode tab 11b. The heat resistance insulating layer 111U includes, for example, ceramics.

A current collector 20 is coupled to the charge/discharge body 10. The current collector 20 shown in Figure 2 to Figure 5, Figure 11, and Figure 13 includes a positive electrode current collection plate 21 and a negative electrode current collection plate 22.

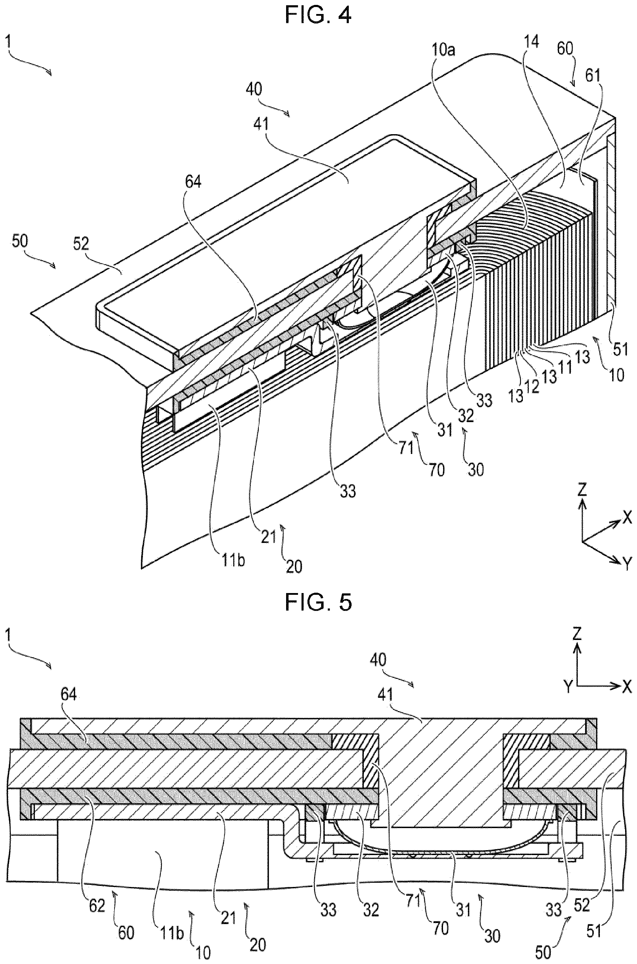

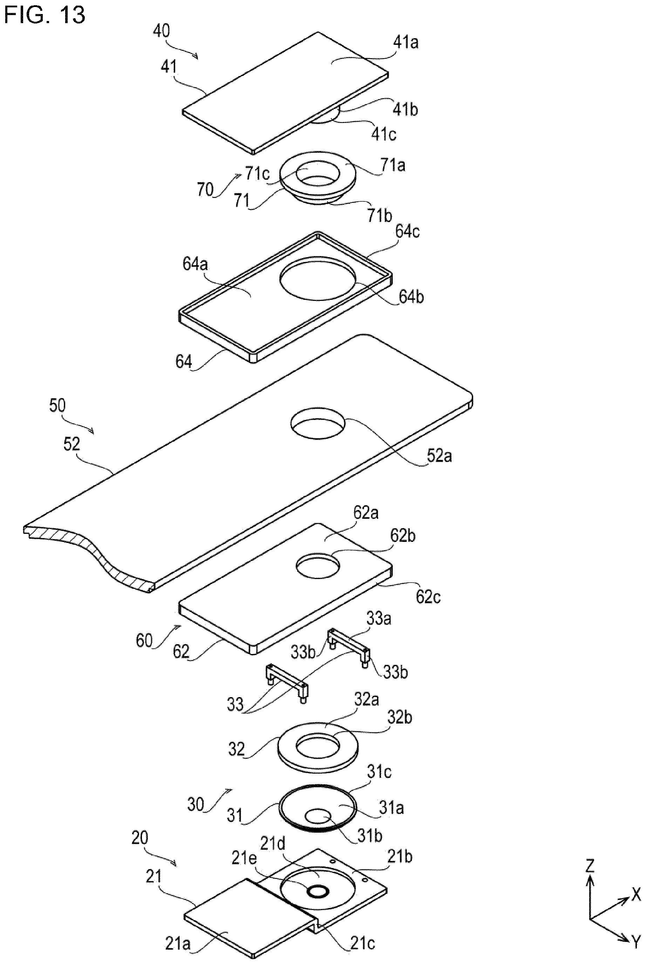

For example, as shown in Figure 4 and Figure 5, the positive electrode current collection plate 21 causes the positive electrode tab 11b of the charge/discharge body 10 and a positive electrode terminal 41 to conduct via the current blocker 30. The positive electrode current collection plate 21 includes, for example, as shown in Figure 13, a rectangular parallelepiped plate-like first base section 21a, a rectangular parallelepiped plate-like second base section 21b, and a coupling section 21c that couples the first base section 21a and the second base section 21b step-wise at different heights. A recess 21d where the second base section 21b is formed thin is formed on the upper surface (the surface on the Z-axis positive direction side) of the second base section 21b. A fragile section 21e, which is a fragile portion hollowed in a ring shape, is formed in the center of the recess 21d. The positive electrode current collection plate 21 is formed by, for example, aluminum or an aluminum alloy.

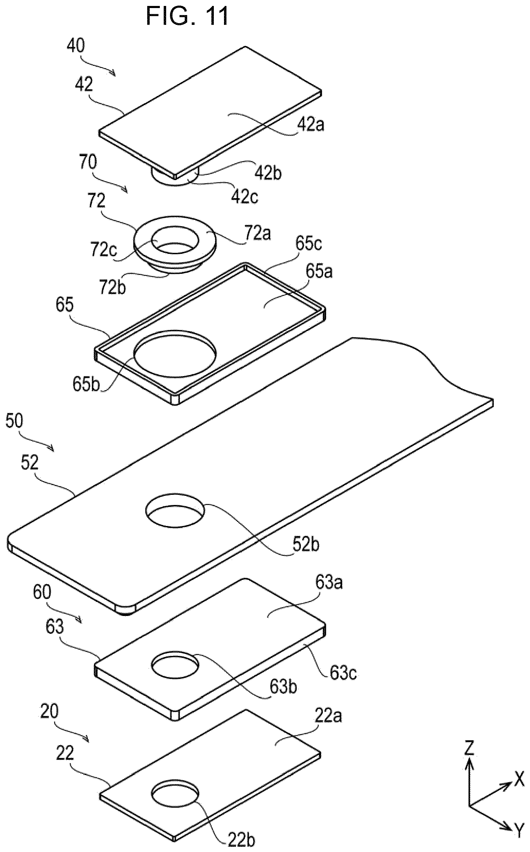

For example, as shown in Figure 2 and Figure 3, the negative electrode current collection plate 22 causes the negative electrode tab 12b of the charge/discharge body 10 and a negative electrode terminal 42 to conduct. The negative electrode current collection plate 22 includes, for example, as shown in Figure 11, a rectangular parallelepiped plate-like base section 22a and an insertion hole 22b piercing through the base section 22a. An insertion section 42b of the negative electrode terminal 42 is inserted into the insertion hole 22b of the negative electrode current collection plate 22. The negative electrode current collection plate 22 is formed by, for example, copper or a copper alloy.

The current blocker 30 is coupled to the current collector 20 and causes the current collector 20 and the positive electrode terminal 41 to conduct. The current blocker 30 shown in Figure 4, Figure 5, and Figure 13 includes a diaphragm 31, a conductive member 32, and a pair of supporting tables 33.

The diaphragm 31 includes, for example, as shown in Figure 13, a curved cylindrical main body section 31a, a disc-shaped first joining section 31b provided on the distal end side (the Z-axis negative direction side) of the main body section 31a, and a ring-like second joining section 31c provided on the proximal end side (the Z-axis positive direction side) of the main body section 31a. The first joining section 31b is joined to the recess 21d of the positive electrode current collection plate 21. The second joining section 31c is joined to the conductive member 32. The diaphragm 31 is formed by, for example, aluminum or an aluminum alloy.

For example, as shown in Figure 13, the conductive member 32 is formed in a cylindrical shape. A positive electrode side first insulating plate 62 is joined to the upper surface (the surface on the Z axis positive direction side) of the conductive member 32. The second joining section 31c of the diaphragm 31 is joined to the peripheral edge of the lower surface (the surface on the Z-axis negative direction side) of the conductive member 32. The conductive member 32 is formed by, for example, aluminum or an aluminum alloy.

The supporting tables 33 include, for example, as shown in Figure 13, rectangular parallelepiped main body sections 33a extending in the latitudinal direction of the battery 1 (the Y-axis direction) and leg sections 33b extending downward (in the Z-axis negative direction) from both the sides in the longitudinal direction of the main body sections 33a (the Y-axis direction). One supporting table 33 is provided at each of both the ends in the longitudinal direction of the battery 1 of the diaphragm 31 (the X-axis direction). The main body sections 33a are attached to the positive electrode side first insulating plate 62. The leg sections 33b are attached to the second base section 21b of the positive electrode current collection plate 21. The supporting tables 33 are formed by, for example, insulating resin.

The external terminal 40 is coupled to the current collector 20 or the current blocker 30. The external terminal 40 shown in Figure 1 to Figure 6, Figure 11, and Figure 13 includes the positive electrode terminal 41 and the negative electrode terminal 42.

For example, as shown in Figure 5, the positive electrode terminal 41 is coupled to the conductive member 32 of the current blocker 30. The positive electrode terminal 41 includes, for example, as shown in Figure 13, a rectangular parallelepiped plate-like base section 41a, a columnar insertion section 41b projecting downward (in the Z-axis negative direction) from the base section 41a, and a cylindrical joining section 41c projecting downward (the Z-axis negative direction) from the peripheral edge of the base section 41a.

For example, as shown in Figure 13, the base section 41a is in contact with a base section 64a of a positive electrode side second insulating plate 64. The insertion section 41b is inserted into an insertion hole 64b of the positive electrode side second insulating plate 64, a positive electrode side insertion hole 52a of a lid 52, an insertion hole 62b of the positive electrode side first insulating plate 62, and an insertion hole 32b of the conductive member 32.

For example, as shown in Figure 13, the joining section 41c projects downward (in the Z-axis negative direction) from the insertion hole 32b of the conductive member 32 and is expanded outward in the radial direction and joined to the conductive member 32. That is, the joining section 41c is caulked at the peripheral edge of the insertion hole 32b of the conductive member 32. Further, the joining section 41c is welded at the peripheral edge of the insertion hole 32b of the conductive member 32. The positive electrode terminal 41 is formed by, for example, aluminum or an aluminum alloy.

For example, as shown in Figure 3, the negative electrode terminal 42 is coupled to the negative electrode current collection plate 22. The negative electrode terminal 42 includes, for example, as shown in Figure 11, a rectangular parallelepiped plate-like base section 42a, a columnar insertion section 42b projecting downward (in the Z-axis negative direction) from the base section 42a, and a cylindrical joining section 42c projecting downward (in the Z-axis negative direction) from the peripheral edge of the base section 42a.

For example, as shown in Figure 11, the base section 42a is in contact with a base section 65a of a negative electrode side second insulating plate 65. The insertion section 42b is inserted into an insertion hole 65b of the negative electrode side second insulating plate 65, a negative electrode side insertion hole 52b of the lid 52, an insertion hole 63b of a negative electrode side first insulating plate 63, and the insertion hole 22b of the negative electrode current collection plate 22.

For example, as shown in Figure 11, the joining section 42c projects downward from the insertion hole 22b of the negative electrode current collection plate 22 and is expanded outward in the radial direction and joined to the negative electrode current collection plate 22. That is, the joining section 42c is caulked at the peripheral edge of the insertion hole 22b of the negative electrode current collection plate 22. Further, the joining section 42c is welded to the peripheral edge of the insertion hole 22b of the negative electrode current collection plate 22. The negative electrode terminal 42 is formed by, for example, copper or a copper alloy.

The constituent members of the battery 1 are housed in or attached to the exterior body 50. The exterior body 50 shown in Figure 1 to Figure 6 and Figure 11 to Figure 13 includes a container 51, the lid 52, and a sealing plug 53.

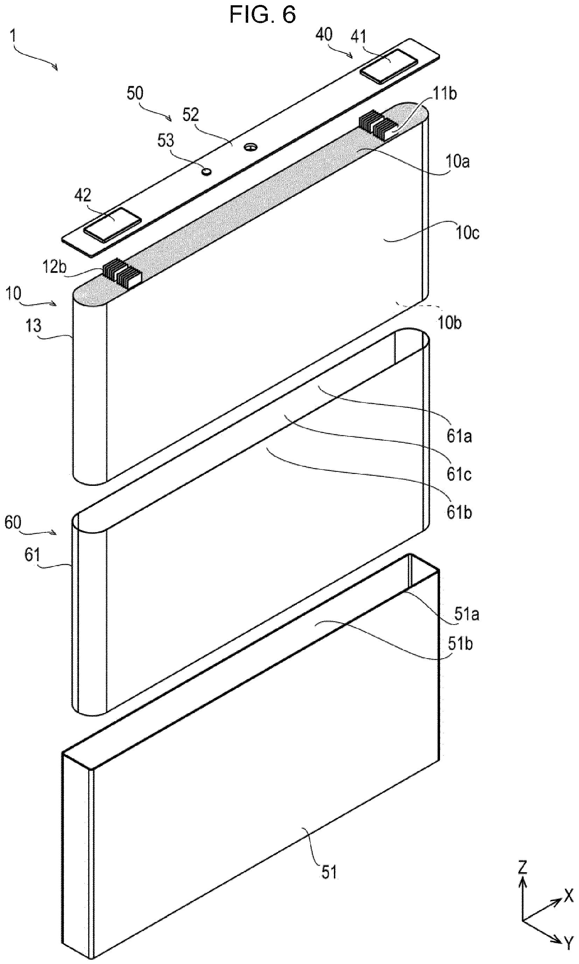

For example, as shown in Figure 2 and Figure 6, the container 51 houses the charge/discharge body 10 and the like covered by an insulation cover 61. The container 51 is configured by a rectangular parallelepiped metal can. The container 51 includes, for example, as shown in Figure 6, an opening 51a opened in the longitudinal direction and an enclosure section 51b stretching to the opening 51a. The container 51 is formed by, for example, aluminum or an aluminum alloy.

For example, as shown in Figure 2 and Figure 6, the lid 52 seals the opening 51a of the container 51. The lid 52 faces, in the charge/discharge body 10, one side section 10a (a side section) adjacent to the positive electrode 11, the separators 13, and the negative electrode 12. The lid 52 is formed by a long plate-shaped metal plate. In the lid 52, the positive electrode side insertion hole 52a configured by a circular through-hole is formed on one end side in the longitudinal direction. The insertion section 41b of the positive electrode terminal 41 is inserted into the positive electrode side insertion hole 52a. In the lid 52, the negative electrode side insertion hole 52b configured by a circular through-hole is formed on the other end side in the longitudinal direction. The insertion section 42b of the negative electrode terminal 42 is inserted into the negative electrode side insertion hole 52b.

In the lid 52, a liquid injection hole 52c configured by a circular through-hole is formed between the positive electrode side insertion hole 52a and the negative electrode side insertion hole 52b. The electrolyte 14 is injected from the lid 52 toward the container 51 via the liquid injection hole 52c. the insertion section 53b of the sealing plug 53 is inserted into the liquid injection hole 52c. In the lid 52, a cleavage valve 52d is formed in the center in the longitudinal direction. The lid 52 is welded to the container 51. The lid 52 is formed by, for example aluminum or an aluminum alloy.

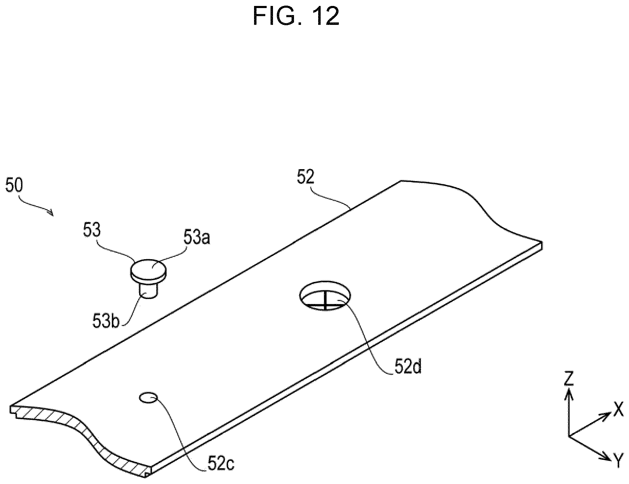

For example, as shown in Figure 12, the sealing plug 53 seals the liquid injection hole 52c of the lid 52. The sealing plug 53 is formed in a columnar shape. The sealing plug 53 includes a head section 53a having a relatively large outer diameter and an insertion section 53b continuing to the head section 53a and having a relatively small outer diameter. The head section 53a of the sealing plug 53 is welded to the lid 52. The sealing plug 53 is formed by, for example, aluminum or an aluminum alloy.

The insulator 60 insulates the constituent members of the battery 1 and the exterior body 50. The insulator 60 shown in Figure 2 to Figure 6, Figure 11, and Figure 13 includes the insulation cover 61, the positive electrode side first insulating plate 62, the negative electrode side first insulating plate 63, the positive electrode side second insulating plate 64, and the negative electrode side second insulating plate 65.

For example, as shown in Figure 6, the insulating cover 61 covers and insulates the charge/discharge body 10. The insulating cover 61 includes a facing pair of side surfaces (a first side surface 61a and a second side surface 61b) and an opening 61c that exposes one side section 10a of the charge/discharge body 10 between the first side surface 61a (one side surface) and the second side surface 61b (the other side surface). The insulation cover 61 covers surfaces other than one surface of the one side section 10a of the charge/discharge body 10. That is, the insulation cover 61 covers the other side section 10b facing the one side section 10a of the charge/discharge body 10 and an outer circumferential section 10c located between the one side section 10a and the other side section 10b of the charge/discharge body 10. The insulation cover 61 is formed in a pentahedron shape by folding a polyhedral sheet in a box shape. The insulation cover 61 is formed by, for example, polypropylene.

For example, as shown in Figure 5, the positive electrode side first insulating plate 62 insulates the positive electrode current collection plate 21 and the conductive member 32 from the lid 52. The positive electrode side first insulating plate 62 includes, for example, as shown in Figure 13, a rectangular parallelepiped plate-like base section 62a, an insertion hole 62b piercing through the base section 62a, and a projection 62c surrounding the side edge of the base section 62a in an annular shape and projecting in a direction away from the lid 52. In the positive electrode side first insulating plate 62, the positive electrode current collection plate 21, the conductive member 32, and the like are housed in a space formed by the base section 62a and the projection 62c. The insertion section 41b of the positive electrode terminal 41 is inserted into the insertion hole 62b. The positive electrode side first insulating plate 62 is formed by, for example, insulating resin.

For example, as shown in Figure 3, the negative electrode side first insulating plate 63 insulates the negative electrode current collection plate 22 and the lid 52. The negative electrode side first insulating plate 63 includes, for example, as shown in Figure 11, a rectangular parallelepiped plate-like base section 63a, an insertion hole 63b piercing through the base section 63a, and a projection 63c surrounding the side edge of the base section 63a in an annular shape and projecting in a direction away from the lid 52. In the negative electrode side first insulating plate 63, the negative electrode current collection plate 22 is housed in a space formed by the base section 63a and the projection 63c. The insertion section 42b of the negative electrode terminal 42 is inserted into the insertion hole 63b. The negative electrode side first insulating plate 63 is formed by, for example, insulating resin.

For example, as shown in Figure 5, the positive electrode side second insulating plate 64 insulates the positive electrode terminal 41 and the lid 52. The positive electrode side second insulating plate 64 includes, for example, as shown in Figure 13, a rectangular parallelepiped-plate like base section 64a, an insertion hole 64b piercing through the base section 64a, and a projection 64c surrounding the side edge of the base section 64a in an annular shape and projecting in a direction away from the lid 52. In the positive electrode side second insulating plate 64, the positive electrode terminal 41 is housed in a space formed by the base section 64a and the projection 64c. The insertion section 41b of the positive electrode terminal 41 is inserted into the insertion hole 64b. The positive electrode side second insulating plate 64 is formed by, for example, insulating resin.

For example, as shown in Figure 3, the negative electrode side second insulating plate 65 insulates the negative electrode terminal 42 and the lid 52. The negative electrode side second insulating plate 65 includes, for example, as shown in Figure 11, a rectangular parallelepiped plate-like base section 65a, an insertion hole 65b piercing through the base section 65a, and a projection 65c surrounding the side edge of the base section 65a in an annular shape and projecting in a direction away from the lid 52. In the negative electrode side second insulating plate 65, the negative electrode terminal 42 is housed in a space formed by the base section 65a and the projection 65c. The insertion section 42b of the negative electrode terminal 42 is inserted into the insertion hole 65b. The negative electrode side second insulating plate 65 is formed by, for example, insulating resin.

The sealing body 70 seals the constituent members of the battery 1 and the exterior body 50. The sealing body 70 shown in Figure 2 to Figure 5, Figure 11, and Figure 13 includes a positive electrode side gasket 71 and a negative electrode side gasket 72.

For example, as shown in Figure 5, the positive electrode side gasket 71 insulates the positive electrode side second insulating plate 64 and the lid 52. The positive electrode side gasket 71 is formed in a cylindrical shape. The positive electrode side gasket 71 includes, for example, as shown in Figure 13, a first insertion section 71a having a relatively large outer diameter, a second insertion section 71b continuing to the first insertion section 71a and having a relatively small outer diameter, and an insertion hole 71c piercing through the first insertion section 71a and the second insertion section 71b. The first insertion section 71a of the positive electrode side gasket 71 is inserted into the insertion hole 64b of the positive electrode side second insulating plate 64. The second insertion section 71b of the positive electrode side gasket 71 is inserted into the positive electrode side insertion hole 52a of the lid 52. The insertion section 41b of the positive electrode terminal 41 is inserted into the insertion hole 71c. The positive electrode side gasket 71 is formed by, for example, rubber having insulation and elasticity.

For example, as shown in Figure 3, the negative electrode side gasket 72 insulates the negative electrode side second insulating plate 65 and the lid 52. The negative electrode side gasket 72 is formed in a cylindrical shape. The negative electrode side gasket 72 includes, for example, as shown in Figure 11, a first insertion section 72a having a relatively large outer diameter, a second insertion section 72b continuing to the first insertion section 72a and having a relatively small outer diameter, and an insertion hole 72c piercing through the first insertion section 72a and the second insertion section 72b. The first insertion section 72a of the negative electrode side gasket 72 is inserted into the insertion hole 65b of the negative electrode side second insulating plate 65. The second insertion section 72b of the negative electrode side gasket 72 is inserted into the negative electrode side insertion hole 52b of the lid 52. The insertion section 42b of the negative electrode terminal 42 is inserted into the insertion hole 72c. The negative electrode side gasket 72 is formed by, for example, rubber having insulation and elasticity.

### (Manufacturing methods for current collection foil of electrode and battery 1 in first embodiment)

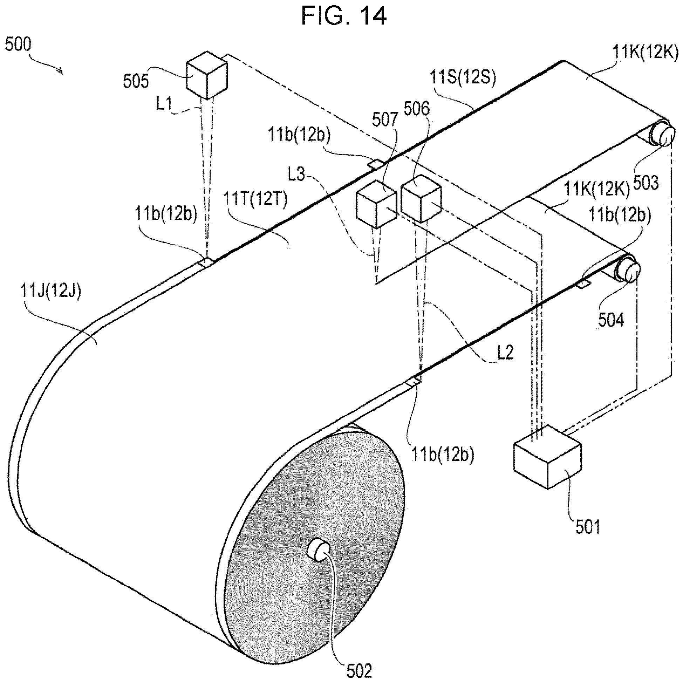

Manufacturing methods for the current collection foil of the electrode and the battery 1 in the first embodiment are explained with reference to Figure 14 and Figure 15. Here, as the manufacturing method for the current collection foil of the electrode, a manufacturing method for the plurality of positive electrode tabs 11b including the positive electrode tab 11d serving as the mark, which is a component specific to the first embodiment, is explained. A manufacturing method for the plurality of negative electrode tabs 12b including the negative electrode tab 12d serving as the mark is the same as the manufacturing method for the plurality of positive electrode tabs 11b including the positive electrode tab 11d serving as the mark. Therefore, explanation of the manufacturing method for the plurality of negative electrode tabs 12b is omitted.

A manufacturing method for the positive electrode current collection layer 11S (a current collection foil) of the positive electrode 11 of the battery 1 shown in Figure 14 includes a first step of conveying a positive electrode first base material 11J (an electrode base material) and a second step of forming the positive electrode tab 11d (the mark) on the positive electrode first base material 11J.

An electrode tab manufacturing apparatus 500 includes, as shown in Figure 14, a controller 501, a carry-out roller 502, a first winding roller 503, a second winding roller 504, a first laser beam machine 505, a second laser beam machine 506, and a third laser beam machine 507.

The electrode tab manufacturing apparatus 500 subjects the positive electrode first base material 11J to laser machining and forms the plurality of positive electrode tabs 11b including the positive electrode tab 11d serving as the mark. The controller 501 controls operations of the carry-out roller 502, the first winding roller 503, the second winding roller 504, the first laser beam machine 505, the second laser beam machine 506, and the third laser beam machine 507. The positive electrode first base material 11J has a long shape and is formed by the positive electrode active material layer 11T being joined to the positive electrode current collection layer 11S. In the positive electrode first base material 11J, the positive electrode active material layer 11T shown in Figure 7 and Figure 8 is not joined to a pair of side edges extending in the longitudinal direction and the positive electrode current collection layer 11S is exposed. The positive electrode first base material 11J is wound on the carry-out roller 502, the cross section of which is formed in a columnar shape.

The controller 601 causes the first winding roller 503 and the second winding roller 504 to operate. The first winding roller 503 and the second winding roller 504 operate, whereby the positive electrode first base material 11J caried out from the carry-out roller 502 moves toward the first laser beam machine 505, the second laser beam machine 506, and the third laser beam machine 507. The first laser beam machine 505 scans one side edge extending in the longitudinal direction of the positive electrode first base material 11J being conveyed while irradiating the one side edge with a laser beam L1. A portion equivalent to a portion between the positive electrode tabs 11b adjacent to each other along the one side edge extending in the longitudinal direction of the positive electrode first base material 11J is cut and discarded. As a result, the positive electrode tab 11d serving as the mark and the positive electrode tabs 11b are formed at one side edge extending in the longitudinal direction of the positive electrode first base material 11J. The plurality of positive electrode tabs 11b are formed at irregular pitches. One positive electrode tab 11d serving as the mark is formed at every length in which one positive electrode 11 is configured. The second laser beam machine 506 scans the other side edge extending in the longitudinal direction of the positive electrode first base material 11J being conveyed while irradiating the other side edge with a laser beam L2. A portion equivalent to a portion between the positive electrode tabs 11b adjacent to each other along the other side edge extending in the longitudinal direction of the positive electrode first base material 11J is cut and discarded. As a result, the positive electrode tab 11d serving as the mark and the positive electrode tabs 11b are formed at the other side edge extending in the longitudinal direction of the positive electrode first base material 11J.

The third laser beam machine 507 irradiates the center of the moving positive electrode first base material 11J with a laser beam L3. The positive electrode first base material 11J is cut into two by the laser beam L3 and a pair of positive electrode second base materials 11K is formed. One positive electrode second base material 11K of the pair of positive electrode second base materials 11K is wound by the first winding roller 503. The other positive electrode second baser material 11K of the pair of positive electrode second base materials 11K is wound by the second winding roller 504. That is, the positive electrode first base material 11J is cut in the center and the two positive electrode second base materials 11K are formed. In each of the positive electrode second base materials 11K, one side edge extending in the longitudinal direction is in a state in which the plurality of positive electrode tabs 11b including the positive electrode tab 11d serving as the mark are formed. In each of the positive electrode second base materials 11K, the other side edge extending in the longitudinal direction is in a state in which the positive electrode current collection layer 11S and the positive electrode active material layer 11T shown in Figure 7 and Figure 8 stretch.

The manufacturing method for the positive electrode current collection layer 11S (the current collection foil) of the positive electrode 11 of the battery 1 shown in Figure 15 includes a third step of cutting, based on the positive electrode tab 11d, the positive electrode second base material 11K (the electrode base material) in a direction crossing a conveying direction and forming the one end portion 11p and the other end portion 11q. The manufacturing method for the charge/discharge body 10 configuring the battery 1 shown in Figure 15 includes a step of winding the positive electrode 11, the negative electrode 12, and the separators 13 while recognizing the mark of the positive electrode 11 and the mark of the negative electrode 12.

A winding apparatus 600 includes, as shown in Figure 15, a controller 601, a delivery roller 602, a driven roller 603, a first carry-out roller 604, a second carry-out roller 605, a first camera 606, a first roller for adjustment 607, a first driven roller 608, a cutter 609, a cutter receiving table 610, a second camera 611, a second roller for adjustment 612, a second driven roller 613, and a winding spindle 614.

The first winding roller 503 on which the positive second base material 11K is wound and the second winding roller 504 on which the negative electrode second base material 12K is wound are attached to the winding apparatus 600.

The winding apparatus 600 winds the positive electrode 11 and the negative electrode 12 while recognizing the mark of the positive electrode 11 and the mark of the negative electrode 12 and forms the charge/discharge body 10. The controller 601 controls operations of the first winding roller 503, the second winding roller 504, the delivery roller 602, the first carry-out roller 604, the second carry-out roller 605, the first camera 606, the first roller for adjustment 607, the cutter 609, the second camera 611, the second roller for adjustment 612, and the winding spindle 614.

The first roller for adjustment 607 and the first driven roller 608 are disposed between the delivery roller 602 and the first winding roller 503. The first camera 606 is disposed in a periphery of the first roller for adjustment 607. The second roller for adjustment 612 and the second driven roller 613 are disposed between the delivery roller 602 and the second winding roller 504. The second camera 611 is disposed in a periphery of the second roller for adjustment 612. The cutter 609 and the cutter receiving table 610 are disposed between the delivery roller 602 and the winding spindle 614.

The controller 601 causes the delivery roller 602 to operate. The delivery roller 602 operates, whereby the positive electrode second base material 11K carried out from the first winding roller 503, a separator base material 13K carried out from the first carry-out roller 604, a negative electrode second base material 12K carried out from the second winding roller 504, and the separator base material 13K carried out from the second carry-out roller 605 move toward the cutter 609 and the cutter receiving table 610. The positive electrode second base material 11K, the separator base material 13K, the negative electrode second base material 12K, and the separator base material 13K move toward the cutter 609 and the cutter receiving table 610 in a state in which the positive electrode second base material 11K, the separator base material 13K, the negative electrode second base material 12K, and the separator base material 13K are sandwiched by the delivery roller 602 and the driven roller 603 while being stacked in this order.

The controller 601 causes the first camera 606 to operate and photograph the positive electrode second base material 11K. The controller 601 determines, based on an image of the photographed positive electrode second base material 11K, whether the position of the positive electrode tab 11d formed on the positive electrode second base material 11K is present in a position corresponding to a position at a winding start of the positive electrode 11 in the charge/discharge body 10. When determining that the position of the positive electrode tab 11d is absent in the corresponding position, the controller 601 determines that the position of the positive electrode tab 11d at the winding start of the positive electrode second base material 11K deviates and adjusts the position of the positive electrode tab 11d. The controller 601 causes the first roller for adjustment 607 to operate and move the positive electrode second base material 11K sandwiched by the first roller for adjustment 607 and the first driven roller 608 toward the cutter 609 and the cutter receiving table 610. After the position of the positive electrode tab 11d at the winding start of the positive electrode second base material 11K is adjusted by the first roller for adjustment 607, an extra portion projecting from the delivery roller 602 and the driven roller 603 is formed in the positive electrode second base material 11K. The controller 601 causes the cutter 609 to operate and cut the extra portion of the positive electrode second base material 11K in conjunction with the cutter receiving table 610. The position at the winding start of the positive electrode second base material 11K with respect to the charge/discharge body 10 is adjusted using the positive electrode tab 11d equivalent to the position at the winding start as the mark according to the control of the controller 601 explained above.

The controller 601 causes the second camera 611 to operate and photograph the negative electrode second base material 12K. The controller 601 determines, based on an image of the photographed negative electrode second base material 12K, whether the position of the negative electrode tab 12d formed on the negative electrode second base material 12K is present in a position corresponding to a position at a winding start of the negative electrode 12 in the charge/discharge body 10. When determining that the position of the negative electrode tab 12d is absent in the corresponding position, the controller 601 determines that the position of the negative electrode tab 12d at the winding start of the negative electrode second base material 12K deviates and adjusts the position of the negative electrode tab 12d. The controller 601 causes the second roller for adjustment 612 to operate and move the negative electrode second base material 12K sandwiched by the second roller for adjustment 612 and the second driven roller 613 toward the cutter 609 and the cutter receiving table 610. After the position of the negative electrode tab 12d at the winding start of the negative electrode second base material 12K is adjusted by the second roller for adjustment 612, an extra portion projecting from the delivery roller 602 and the driven roller 603 is formed in the negative electrode second base material 12K. The controller 601 causes the cutter 609 to operate and cut the extra portion of the negative electrode second base material 12K in conjunction with the cutter receiving table 610. The position at the winding start of the negative electrode second base material 12K with respect to the charge/discharge body 10 is adjusted using the negative electrode tab 12d equivalent to the position at the winding start as the mark according to the control of the controller 601 explained above.

The controller 601 causes the delivery roller 602 to operate and delivers the positive electrode second base material 11K, the separator base material 13K, the negative electrode second base material 12K, and the separator base material 13K in the stacked state toward the winding spindle 614. The controller 601 causes the winding spindle 614 to operate and wind the positive electrode second base material 11K, the separator base material 13K, the negative electrode second base material 12K, and the separator base material 13K in the stacked state. The positive electrode second base material 11K, the separator base material 13K, the negative electrode second base material 12K, and the separator base material 13K are wound by the winding spindle 614 to configure one charge/discharge body 10. The controller 601 causes the cutter 609 to operate and cut end portions of the positive electrode second base material 11K, the separator base material 13K, the negative electrode second base material 12K, and the separator base material 13K, which are wound.

Thereafter, the charge/discharge body 10 is removed from the winding spindle 614. The charge/discharge body 10 is housed in the container 51. The lid 52 is joined to the container 51. The electrolyte 14 is injected from the liquid injection hole 52c of the lid 52 toward the container 51. The electrolyte 14 is impregnated in the separators 13. The sealing plug 53 is joined to the liquid injection hole 52c of the lid 52.

(Effects of current collection foil of electrode, electrode, battery 1, manufacturing method for current collection foil of electrode, and manufacturing method for battery 1 in first embodiment).

Effects of the current collection foil of the electrode, the electrode, the battery 1, the manufacturing method for the current collection foil of the electrode, and the manufacturing method for the battery 1 in the first embodiment are explained with reference to Figure 7, Figure 8, Figure 10, Figure 14, and Figure 15. In particular, effects concerning the mark formed in the positive electrode 11 are mainly explained. A configuration and effects concerning the mark formed in the negative electrode 12 are the same as the configuration and the effects concerning the mark formed in the positive electrode 11.

In the battery 1, for example, the mark for distinguishing any one positive electrode tab 11b of the current collection section 11a and the other positive electrode tabs 11b is included in, for example, the positive electrode current collection layer 11S (the current collection foil) of the positive electrode 11 (the electrode). Further, the mark is formed in a manufacturing method for the positive electrode current collection layer 11S of, for example, the positive electrode 11 of the battery 1. Further, in the manufacturing method for the battery 1, the positive electrode 11, the negative electrode 12, and the separators (the insulators) are wound while recognizing the mark.

With such a configuration, in the charge/discharge body 10 of the battery 1, it is possible to prevent the position of the positive electrode tab 11d at the winding start of the positive electrode 11 from deviating. Therefore, in the charge/discharge body 10, it is possible to properly superimpose the plurality of positive electrode tabs 11b of the positive electrode 11. The charge/discharge body 10 of the battery 1 is configured by the positive electrode 11, the separators 13, and the negative electrode 12 being wound. Therefore, the plurality of positive electrode tabs 11b are properly superimposed, whereby the battery 1 can satisfy expected battery performance. With such a configuration, in the manufacturing method for the battery 1, it is possible to correctly recognize a cutting-out position of the positive electrode 11 based on the mark. In the manufacturing of the positive electrode current collection layer 11S of the positive electrode 11 and the manufacturing method for the battery 1, when manufacturing is resumed after being stopped by some reason, it is possible to correctly recognize the cutting-out position of the positive electrode 11 based on the mark. Further, in the formation of the positive electrode tab 11b on the positive electrode first base material 11J (the electrode base material), when the manufacturing is resumed after being stopped by some reason, it is possible to correctly recognize a state of the formed positive electrode tab 11b based on the mark.

In the positive electrode 11, the mark is formed to be capable of distinguishing the positive electrode tabs 11b including the positive electrode tab 11d (the first one positive electrode tab 11b) closest to the one end portion 11p (a portion at a winding start) of the current collection section 11a and the other positive electrode tabs 11b (for example, fourteen positive electrode tabs 11b in total from second to fifteenth positive electrode tabs 11b). In the manufacturing method for the positive electrode current collection layer 11S of the positive electrode 11, the mark is formed in the second step. That is, the first positive electrode tab 11d that is closest to the one end portion 11p of the current collection section 11a and is most easily distinguished is set as the mark. With such a configuration, it is possible to configure the mark based on a simple method that easily distinguishes the mark.

In the positive electrode 11, the mark is an external shape of the positive electrode tab 11d (the first one positive electrode tab 11b) closet to the one end portion 11p (the portion at the winding start) of the current collection section 11a and is an external shape different from the external shape of the other positive electrode tabs 11b (the fourteen positive electrode tabs 11b from the second to the fifteenth positive electrode tabs 11b). In the manufacturing method for the positive electrode current collection layer 11S of the positive electrode 11, the mark is formed in the second step. With such a configuration, it is possible to form the mark with the external shape of the positive electrode tab 11d that has a simple configuration and is easily distinguished.

In the positive electrode 11, the positive electrode tab 11d and the positive electrode tabs 11b may be formed in trapezoidal shapes. In this case, in the positive electrode 11, ratios of lengths of pairs of opposite sides in the trapezoidal shapes are differentiated in, for example, the positive electrode tab 11d closest to the one end portion 11p of the current collection section 11a and the other positive electrode tabs 11b. With such a configuration, the positive electrode tab 11d, which is the mark, and the plurality of positive electrode tabs 11b can be distinguished by a slight difference in the external shapes. The positive electrode tab 11d, which is the mark, and the plurality of positive electrode tabs 11b can be individually created without increasing a manufacturing time.

In the positive electrode 11, the sizes of the curved corner portions may be differentiated in the positive electrode tab 11d and the positive electrode tabs 11b. In this case, in the positive electrode 11, the curvature radiuses and the like of the corner portions are differentiated in, for example, the positive electrode tab 11d closest to the one end portion 11p of the current collection section 11a and the other positive electrode tabs 11b. With such a configuration, the positive electrode tab 11d, which is the mark, and the plurality of positive electrode tabs 11b can be distinguished by a slight difference in the external shapes. The positive electrode tab 11d, which is the mark, and the plurality of positive electrode tabs 11b can be individually created without increasing a manufacturing time.

In the first embodiment, the configuration and the effects concerning the positive electrode tab 11d (the mark) formed in the positive electrode 11 are explained above. A configuration and effects concerning the negative electrode tab 12d (the mark) formed in the negative electrode 12 are the same as the configuration and the effects concerning the positive electrode tab 11d (the mark) formed in the positive electrode 11.

### [Second Embodiment]

### (Configuration of mark formed in electrode in second embodiment)

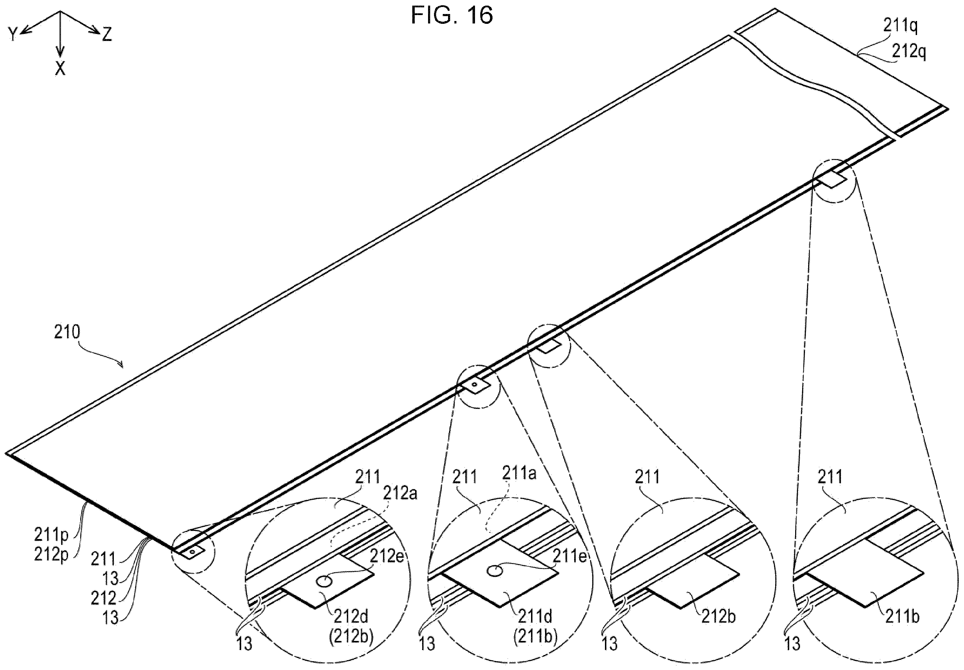

A configuration of a mark formed in a positive electrode 211 in a second embodiment is explained with reference to Figure 16.

In the second embodiment, recesses (a recess 211e and a recess 212e) formed in electrode tabs (a positive electrode tab 211b and a negative electrode tab 212b) are used as marks. In the second embodiment, components different from the components in the first embodiment are explained. As the marks, the recess 211e formed in the positive electrode tab 211b equivalent to a mark on a positive electrode side is mainly explained. In the second embodiment, a configuration of and a manufacturing method for the recess 212e of the negative electrode tab 21bb are the same as a configuration of and a manufacturing method for the recess 211e of the positive electrode tab 211b. Therefore, explanation of the configuration of and the manufacturing method for the recess 212e of the negative electrode tab 211b is omitted.

In the positive electrode 211, the mark is formed in a positive electrode tab 211d closest to one end portion 211p of a current collection section 211a among a plurality of positive electrode tabs 211b. The recess 211e having a concave shape is formed in the positive electrode tab 211d as the mark. The recess 211e is formed in a circular shape, for example, in the center of the positive electrode tab 211d. The recess 211e may be formed at an end portion of the positive electrode tab 211d to avoid joining portions of the positive electrode tab 211d and the plurality of positive electrode tabs 211b.

Here, the mark included in the positive electrode tabs 211b only has to be configured to be able to distinguish any one positive electrode tab 211b and the other positive electrode tabs 211b among the plurality of positive electrode tabs 211b formed in the current collection section 11a. That is, the positive electrode tab 211b including the mark is not limited to a first positive electrode tab 211b located at a winding start of the current collection section 211a. For example, the positive electrode tab 211b including the mark may be the positive electrode tab 211b located at a winding end of the current collection section 211a or the positive electrode tab 211b located in the center among the plurality of positive electrode tabs 211b formed in the current collection section 211a.

### (Manufacturing method for mark formed in electrode in second embodiment)

The manufacturing method for the mark formed in the positive electrode 211 in the second embodiment is explained with reference to Figure 16.

The recess 211e, which is the mark, is configured as a dissolution mark formed by partially recessing the positive electrode tab 211d in a concave shape by irradiating the positive electrode tab 211d with a laser beam. The recess 211e is formed by a laser beam of a laser beam machine having a lower output than the first laser beam machine 505 or the second laser beam machine 506 when the positive electrode tab 211d is formed by the laser beam L1 of the first laser beam machine 505 or the laser beam L2 of the second laser beam machine 506. Alternatively, the recess 211e is formed by the laser beam L1 of the first laser beam machine 505 or the laser beam L2 of the second laser beam machine 506 while the positive electrode tab 211d being formed. In this case, the output of the laser beam L1 of the first laser beam machine 505 or the laser beam L2 of the second laser beam machine 506 is sufficiently reduced.

The recess 211e, which is the mark, may be configured as an indentation formed by partially recessing the positive electrode tab 211d in a concave shape by pressing the positive electrode tab 211d with a convex jib.

### (Effects of mark formed in electrode in second embodiment)

Effects of the mark formed in the positive electrode 211 in the second embodiment are explained with reference to Figure 16.

The mark is the recess 211e formed in the positive electrode tab 211d, for example, in the positive electrode 211. With such a configuration, the mark can be configured by the recess 211e having a simple configuration and easily distinguished.

The recess 211e is a laser mark or an indentation. With such a configuration, a shape, depth, and the like of the mark can be optionally set by a method having high versatility.

In the second embodiment, the configuration and the effects concerning the recess 211e (the mark) formed in the positive electrode tab 211b are explained above. A configuration and effects concerning the recess 212e (the mark) formed in the negative electrode tab 212b are the same as the configuration and the effects concerning the recess 211e (the mark) formed in the positive electrode tab 211b.

### [Third Embodiment]

### (Configuration of mark formed in electrode in third embodiment)

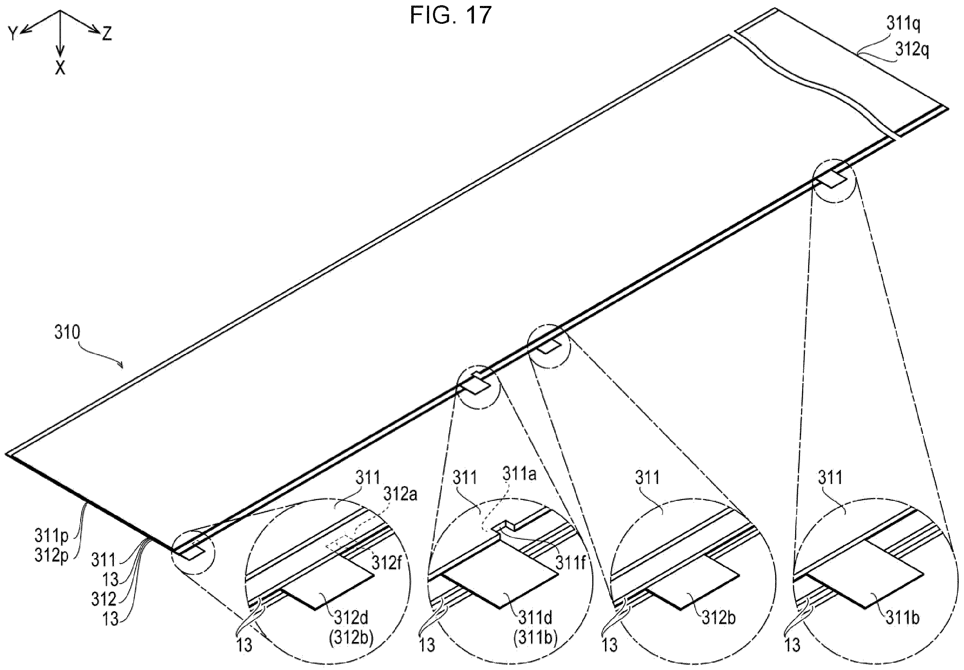

A configuration of a mark formed in a positive electrode 311 in a third embodiment is explained with reference to Figure 17.

In the third embodiment, cutouts (a cutout 311f and a cutout 312f) formed in a current collection section 311a adjacent to electrode tabs (a positive electrode tab 311b and a negative electrode tab 312b) are used as marks. In the third embodiment, components different from the components in the first embodiment are explained. As the mark, the cutout 311f formed in the current collection section 311a equivalent to a mark on a positive electrode side is mainly explained. In the third embodiment, a configuration of and a manufacturing method for the cutout 312f equivalent to the mark of the negative electrode 312 are the same as a configuration of and a manufacturing method for the cutout 311f equivalent to the mark of the positive electrode 311. Therefore, explanation of the configuration of and the manufacturing method for the cutout 312f is omitted.

As shown in Figure 17, the mark is formed as the cutout 311f in a portion adjacent to a first positive electrode tab 311d closest to one end portion 311p of the current collection section 311a in the current collection section 311a of the positive electrode 311. The cutout 311f is formed by a portion located at a base of the positive electrode tab 311d being cut out in a rectangular shape in the current collection section 311a. The cutout 311f may be formed by cutting out, in a semiarcuate shape or a groove shape, the portion located at the base of the positive electrode tab 311d in the current collection section 311a. The cutout 311f is formed on one side of the base of the positive electrode tab 311d in the current collection section 311a. The cutout 311f may be formed on both sides of the base of the positive electrode tab 311d in the current collection section 311a.

Here, the mark included in the current collection section 311a only has to be able to distinguish any one positive electrode tab 311b and the other positive electrode tabs 311b among the plurality of positive electrode tabs 311b formed in the current collection section 11a. That is, the cutout 311f, which is the mark, is not limited to be configured to be formed in the portion adjacent to the base of a first positive electrode tab 311b closest to the one end portion 311p. For example, the mark included in the current collection section 311a may be formed in a portion adjacent to a base of the positive electrode tab 311b located at a winding end of the current collection section 311a or a portion adjacent to a base of the positive electrode tab 311b located in the center among the plurality of positive electrode tabs 311b formed in the current collection section 311a. The cutout 311f, which is the mark, is not limited to be configured to be formed in the portion of the base of the positive electrode tab 311d. For example, the cutout 311f, which is the mark, may be formed between two positive electrode tabs 311b adjacent to each other among the plurality of positive electrode tabs 311b formed in the current collection section 311a.

The mark is not limited to the configuration of the cutout 311f formed by partially cutting out the current collection section 311a. The mark may be configured by, for example, the surface of the current collection section 311a being recessed in a concave shape or a groove shape.

The mark is formed in, for example, a portion where a positive electrode active material layer is not joined in the current collection section 311a. Therefore, the mark does not affect electric characteristic of a battery.

### (Manufacturing method for mark formed in electrode in third embodiment)

The manufacturing method for the mark formed in the positive electrode 311 in the third embodiment is explained with reference to Figure 17 and the like.

The cutout 311f, which is the mark, is formed together with the positive electrode tab 311d when the positive electrode tab 311d is formed in the positive electrode first base material in the manufacturing method shown in Figure 14. That is, the positive electrode tab 311d and the cutout 311f are simultaneously formed by irradiating a side edge of the positive electrode first base material with the laser beams L1 and L2 and cutting the side edge.

### (Effects of mark formed in electrode in third embodiment)

Effects of the mark formed in the positive electrode 311 in the third embodiment are explained with reference to Figure 17.

The mark is the cutout 311f formed by the current collection 311a being partially cut out, for example, in the positive electrode 311. With such a configuration, the mark can be configured by the cutout 311f having a simple configuration and easily distinguished. With such a configuration, since the cutout 311f can be formed together with the positive electrode tab 311d, the cutout 311f can be easily formed.

The cutout 311f is formed in a portion adjacent to the positive electrode tab 311d closest to the one end portion 311p of the current collection section 311a, for example, in the positive electrode 311. With such a configuration, a position at a winding start of the positive electrode 311 with respect to the charge/discharge body 10 can be easily adjusted using, as the mark, the cutout 311f located in a periphery of the positive electrode tab 311d equivalent to the position at the winding start of the positive electrode 311.

In the third embodiment, the configuration and the effects concerning the cutout 311f (the mark) formed in the current collection section 311a of the positive electrode 311 are explained above. A configuration and effects concerning the cutout 312f (the mark) formed in the current collection section 312a of the negative electrode 312 are the same as the configuration and the effects concerning the cutout 311f (the mark) formed in the current collection section 311a of the positive electrode 311.

The battery of the present invention is not limited to the configurations described in the embodiments and can be configured as appropriate based on contents described in the claims.

The battery of the present invention is not limited to a lithium ion battery. The battery of the present invention can be applied to, for example, a nickel hydrogen battery and a lead battery. The battery of the present invention is not limited to a secondary battery. The battery of the present invention can be applied to a primary battery. The battery of the present invention is not limited to a configuration in which a charge/discharge body is sealed by a container and a lid. The battery of the present invention can be applied to a configuration in which a charge/discharge body is sealed by a laminate film. Each of the embodiments is explained in detail or simply in order to clearly explain the present invention and does not always need to include all the components explained above and may include not-shown components. A part of components in a certain embodiment may be deleted, substituted by components in other embodiments, or combined with components in the other embodiments.

### Reference Signs List

1 battery, 11 positive electrode (electrode), 11J positive electrode first base material (electrode base material), 11K positive electrode second base material (electrode base material), 11S positive electrode current collection layer (current collection foil), 11a current collection section, 11b positive electrode tab (terminal section), 11c side edge, 11d positive electrode tab (mark), 11p one end portion, 12 negative electrode (electrode), 12J negative electrode first base material (electrode base material), 12K negative electrode second base material (electrode base material), 12S negative electrode current collection layer (current collection foil), 12a current collection section, 12b negative electrode tab (terminal section), 12c side edge, 12d negative electrode tab (mark), 12p one end portion, 13 separator (insulator), 14 electrolyte, 211 positive electrode (electrode), 211a current collection section, 211b positive electrode tab (terminal section), 211d positive electrode tab (terminal section), 211e recess (mark), 211p one end portion, 212 negative electrode (electrode), 212a current collection section, 212b negative electrode tab (terminal section), 212d negative electrode tab (terminal section), 212e recess (mark), 212p one end portion, 311 positive electrode (electrode), 311a current collection section, 311b positive electrode tab (terminal section) 311d positive electrode tab (terminal section), 311f cutout (mark), 311p one end portion, 312 negative electrode (electrode), 312a current collection section, 312b negative electrode tab (terminal section), 312d negative electrode tab (terminal section), 312f cutout (mark), 312p one end portion

## Claims

1. A current collection foil of an electrode comprising:
a current collection section joined with an active material and wound; and
a plurality of terminal sections provided at a side edge extending in a winding direction of the current collection section, wherein
the terminal sections adjacent to one another in the winding direction include the terminal sections formed with relatively longer intervals on a side close to another end portion at a winding end than a side close to one end portion at a winding start of the current collection section,
the plurality of terminal sections overlap in a state in which the current collection section is wound, and
at least one of the terminal sections and the current collection section includes a mark for distinguishing any one of the terminal sections of the current collection section and the other terminal sections.

2. The current collection foil of the electrode according to claim 1, wherein the mark is formed to be capable of distinguishing the terminal section closest to the one end portion of the current collection section and the other terminal sections.

3. The current collection foil of the electrode according to claim 1 or 2, wherein the mark is an external shape of the terminal section closest to the one end portion of the current collection section and is an external shape different from an external shape of the other terminal sections.

4. The current collection foil of the electrode according to any one of claims 1 to 3, wherein
the terminal sections are formed in trapezoidal shapes, and
the terminal section closest to the one end portion of the current collection section and the other terminal sections are different in ratios of lengths of pairs of opposite sides in the trapezoidal shapes.

5. The current collection foil of the electrode according to any one of claims 1 to 4, wherein
the terminal sections are formed in a rectangular shape including at least one or more curved corner portions, and
the terminal section closest to the one end portion of the current collection section and the other terminal sections are different in sizes of the curves in the corner portions.

6. The current collection foil of the electrode according to any one of claims 1 to 5, wherein the mark is a concave recess formed in the terminal sections.

7. The current collection foil of the electrode according to claim 6, wherein the recess is a laser mark or an indentation.

8. The current collection foil of the electrode according to any one of claims 1 to 7, wherein the mark is formed by the current collection section being partially cutout.

9. The current collection foil of the electrode according to claim 8, wherein the mark is formed in a portion adjacent to the terminal section closest to the one end portion of the current collection section in the current collection section.

10. An electrode comprising:
the current collection foil of the electrode according to any one of claims 1 to 9; and
an active material joined to the current collection foil.

11. A battery comprising:
a positive electrode;
a negative electrode;
an insulator provided between the positive electrode and the negative electrode; and
an electrolyte impregnated in the insulator, wherein
at least one of the positive electrode and the negative electrode is the electrode according to claim 10.

12. A method of cutting an electrode base material in which a plurality of current collection foils of an electrode linearly stretch, each of the plurality of current collection foils including a current collection section joined with an active material and wound and a plurality of terminal sections provided at a side edge extending in a winding direction of the current collection section, and manufacturing the current collection foil of the electrode,
the terminal sections adjacent to one another in the winding direction including the terminal sections formed with relatively longer intervals on a side close to another end portion at a winding end than a side close to one end portion at a winding start of the current collection section,
the plurality of terminal sections overlapping in a state in which the current collection section is wound,
the electrode base material in which at least one of the terminal sections and the current collection section includes a mark for distinguishing any one of the terminal sections of the current collection section and the other terminal sections being used,
the manufacturing method for the current collection foil of the electrode comprising:
a first step of conveying the electrode base material;
a second step of forming the mark; and
a third step of cutting, based on the mark, the electrode base material in a direction crossing a conveying direction of the electrode base material and forming the one end portion and the other end portions.

13. The manufacturing method for the current collection foil of the electrode according to claim 12, wherein, in the second step, the mark formed to be capable of distinguishing the terminal section closest to the one end portion of the current collection section and the other terminal sections is formed.

14. The manufacturing method for the current collection foil of the electrode according to claim 12 or 13, wherein, in the second step, the mark that is an external shape of the terminal section closest to the one end portion of the current collection section and is an external shape different from an external shape of the other terminal sections is formed.

15. A manufacturing method for a battery comprising a step of winding a positive electrode, a negative electrode, and an insulator provided between the positive electrode and the negative electrode while recognizing at least one mark of a mark of the positive electrode and a mark of the negative electrode, wherein
as a current collection foil included in at least one of the positive electrode and the negative electrode, the current collection foil manufactured by the manufacturing method for the current collection foil of the electrode according to any one of claims 12 to 14 is used.
